# EUROPEAN PATENT APPLICATION

(11) **EP 4 782 188 A1**
(43) Date of publication of application: **29.07.2026**
(21) Application number: 26152070.4
(22) Date of filing: 15.01.2026
(51) Int. Cl.: B29C 70/30, B32B 3/08, B32B 3/18, B32B 5/12, B32B 5/26, B32B 7/04

(54) **FORMING A COMPOSITE STRUCTURE USING PRE-KITTED PLY SETS**

(30) Priority: 24.01.2025 US 202519036740
(71) Applicant: The Boeing Company, Arlington, VA 22202 (US)
(72) Inventor: Crothers, Phillip John, Arlington, VA, 22202 (US)
(74) Representative: Hoffmann Eitle

(57) **Abstract**

A composite structure and methods of forming a composite structure are presented. The composite structure comprises a plurality of pre-kitted ply sets with a same ply layup positioned to form continuous plies. Each pre-kitted ply set of the plurality of pre-kitted ply sets comprises a first ply having a first shape and an overhang on a first side of the ply layup; and a second ply overlying the first ply, the second ply having a second shape.

## Description

### 1. Field:

The present disclosure relates generally to composite manufacturing and more specifically to laying up composite plies to form a composite prepreg layup.

### 2. Background:

Thermoplastic structures have been limited in application to large scale structures due to the recurring cost of materials, the non-recurring cost of large-scale processing infrastructure, and the lower deposition rates of thermoplastic materials lead to a multiplication of the infrastructure and tooling.

Therefore, it would be desirable to have a method and apparatus that takes into account at least some of the issues discussed above, as well as other possible issues. For example, it would be desirable to lower costs of manufacturing large thermoplastic structures. Additionally, it would be desirable to increase the rate of manufacturing large thermoplastic structures.

### SUMMARY

An embodiment of the present disclosure provides a composite structure. The composite structure comprises a plurality of pre-kitted ply sets with a same ply layup positioned to form continuous plies. Each pre-kitted ply set of the plurality of pre-kitted ply sets comprises a first ply having a first shape and an overhang on a first side of the ply layup; and a second ply overlying the first ply, the second ply having a second shape.

Another embodiment of the present disclosure provides a method of forming a composite structure. A first pre-kitted ply set is laid onto a tool. The first pre-kitted ply set comprises a ply layup comprising a first ply having a first shape and an overhang on a first side of the ply layup and a second ply overlying the first ply, the second ply having a second shape. A second pre-kitted ply set is laid onto the tool abutting the first pre-kitted ply set to form continuous plies. The second pre-kitted ply set comprises the ply layup, wherein a first ply of the second pre-kitted ply set abuts the first ply of the first pre-kitted ply set and a second ply of the second pre-kitted ply set abuts the second ply of the first pre-kitted ply set.

Yet another embodiment of the present disclosure provides a method of forming a composite structure. A plurality of pre-kitted ply sets is laid up with a same ply layup to form continuous plies. Each pre-kitted ply set of the plurality of pre-kitted ply sets comprises a first ply having a first shape and an overhang on a first side of the ply layup, and a second ply overlying the first ply, the second ply having a second shape.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of an aircraft in accordance with an illustrative embodiment;
**Figures 2A** and **2B** are an illustration of a block diagram of a manufacturing environment in accordance with an illustrative embodiment;
**Figure 3** is an illustration of a top view of a pre-kitted ply set in accordance with an illustrative embodiment;
**Figure 4** is an illustration of a top view of a plurality of pre-kitted ply sets in accordance with an illustrative embodiment;
**Figure 5** is an illustration of a top view of a plurality of pre-kitted ply sets in accordance with an illustrative embodiment;
**Figure 6** is an illustration of a top view of a pre-kitted ply end set in accordance with an illustrative embodiment;
**Figure 7** is an illustration of a top view of a plurality of pre-kitted ply sets and a pre-kitted ply end set in accordance with an illustrative embodiment;
**Figure 8** is an illustration of a top view of a plurality of pre-kitted ply sets and a second plurality of pre-kitted ply sets in accordance with an illustrative embodiment;
**Figure 9** is an illustration of a top view of a pre-kitted ply set in accordance with an illustrative embodiment;
**Figure 10** is an illustration of a top view of a plurality of pre-kitted ply sets in accordance with an illustrative embodiment;
**Figures 11A** and **11B** are a flowchart of a method of forming a composite structure in accordance with an illustrative embodiment;
**Figure 12** is a flowchart of a method of forming a composite structure in accordance with an illustrative embodiment;
**Figure 13** is an illustration of an aircraft manufacturing and service method in a form of a block diagram in accordance with an illustrative embodiment; and
**Figure 14** is an illustration of an aircraft in a form of a block diagram in which an illustrative embodiment may be implemented.

### DETAILED DESCRIPTION

The illustrative examples recognize and take into account several considerations. The illustrative examples recognize and take into account that current thermoplastic processing techniques include preconsolidation of an entire thermoplastic stack, automated fiber placement (AFP), prepreg processing, and dry fiber processing. The illustrative examples recognize and take into account that pre-consolidation of an entire stack is typically done in a flat configuration to save tooling.

The illustrative examples recognize and take into account that automated fiber placement (AFP) is large scale, expensive, and slow. The illustrative examples recognize and take into account that in current thermoplastic processing, the entire thermoplastic stack is formed into a final shape. The illustrative examples recognize and take into account that large stack consolidation of thermoplastics uses undesirably high pressure.

The illustrative examples recognize and take into account that prepreg automation includes tracking and utilizing outlife times, an undesirably large autoclave, and time to cure. The illustrative examples recognize and take into account that dry fiber processing of thermoplastics using dry fiber automation can include undesirable aspects such as limp fabrics, fiber fray, and fiber bulk.

The illustrative examples recognize and take into account that compared to thermoset prepregs or dry fibers/fabrics, thermoplastic materials have greater stiffness. The illustrative examples recognize and take into account that thermoplastic materials do not have to be fully restrained over the entire surface. The illustrative examples recognize and take into account that thermoplastic materials have zero tack. The illustrative examples recognize and take into account that thermoplastic materials are easy to pick up and release with suction. The illustrative examples recognize and take into account that thermoplastic materials have neater edges enabling improved accuracy of alignment to placement tolerances and adjacent plies and inspection operations. The illustrative examples recognize and take into account that neater edges can improve pick and place deposition activities when building up larger ply stacks from preforms.

The illustrative examples present methods of building preformed and pre-consolidated packs of thermoplastic plies to enable feeder lines to the large scale part deposition and consolidation. The illustrative examples reduce the overall pressure and infrastructure for the final, full-scale part consolidation. The illustrative examples reducing the overall pressure for consolidation of the large thermoplastic structure may lead to the use of a mini-clave infrastructure, instead of full-scale autoclaves.

Further, by preforming of packs of lesser thickness with a smaller number of plies, the illustrative examples enable more robust forming of complex shapes when compared to forming of thicker and larger stacks of plies.

The use of thermoplastic prepreg materials such as tapes in the illustrative examples will also enable greater automation and efficiencies in the deposition activity.

The illustrative examples can reduce the final consolidation infrastructure and tooling by reducing the cycle time for deposition. The illustrative examples can reduce the consolidation time and tooling required. In some of the illustrative examples, there is no matched tooling for the final large thermoplastic structure and there is a reduced autoclave requirement.

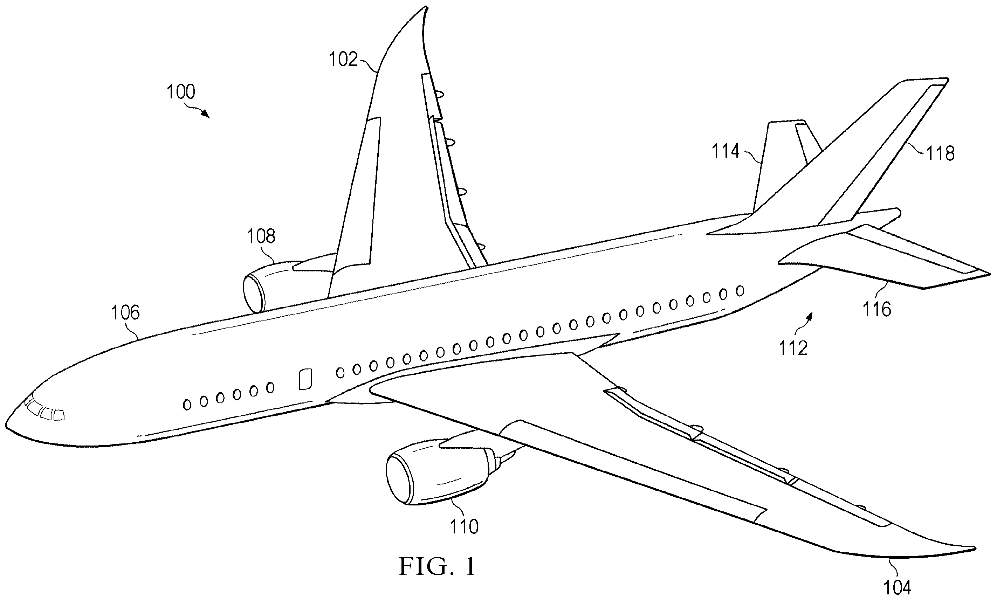

Turning now to **Figure 1****,** an illustration of an aircraft is depicted in accordance with an illustrative embodiment. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft that can have components manufactured using the illustrative examples. At least one of wing **102,** wing **104,** or body **106** can comprise portions manufactured using the illustrative examples.

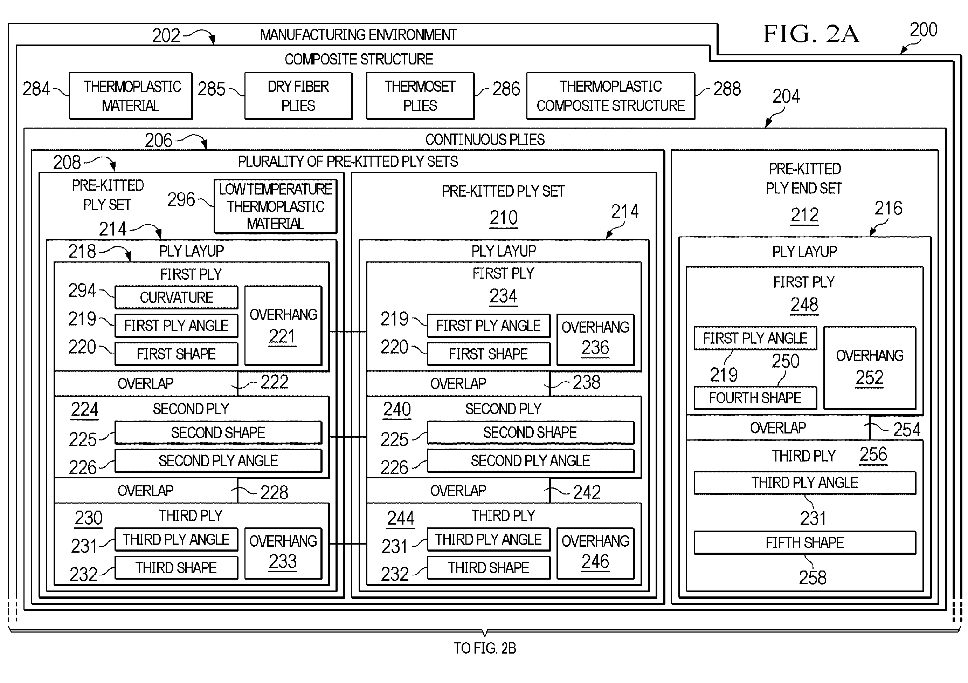

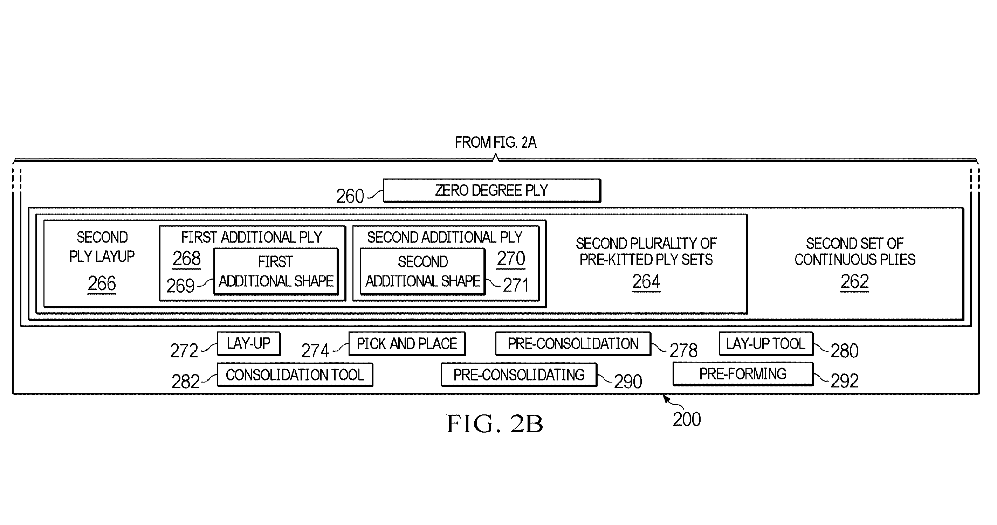

Turning now to **Figures 2A** and **2B****,** an illustration of a block diagram of a manufacturing environment is depicted in accordance with an illustrative embodiment. At least a portion of aircraft **100 of** **Figure 1** can be manufactured according to the illustrative examples in manufacturing environment **200.** Composite structure **202** comprising continuous plies **204** can be laid up in manufacturing environment **200** using plurality of pre-kitted ply sets **206.** By abutting plurality of pre-kitted ply sets **206,** continuous plies **204** of composite structure **202** are formed. Continuous plies **204** are layers of composite structure **202** formed by respective plies of pre-kitted ply sets positioned next to each other. In some illustrative examples, continuous plies **204** are also referred to as combined, aggregated, or merged. Continuous plies **204** may be referred to as aggregated plies.

In this illustrative example, continuous plies **204** comprises a first aggregated ply formed from first ply **218** and first ply **234.** In this illustrative example, continuous plies **204** comprises a second aggregated ply formed from second ply **224** and second ply **240.**

Plurality of pre-kitted ply sets **206** are each pre-consolidated prior to placement on consolidation tool **282.** In some illustrative examples, plurality of pre-kitted ply sets **206** are each pre-formed on lay-up tool **280** prior to placement on consolidation tool **282.** In some illustrative examples, lay-up tool **280** is an adaptive forming tool.

Using plurality of pre-kitted ply sets **206** allows prefabrication on a small scale (smaller scale infrastructure) to enable large scale part production and reduces the amount of monumental equipment. In some illustrative examples, plurality of pre-kitted ply sets **206** comprises small ply quantities to allow for prefabrication at lower pressures. In some illustrative examples, small ply quantities in plurality of pre-kitted ply sets **206** comprises pre-kitting no more than three plies. In some illustrative examples, small ply quantities in plurality of pre-kitted ply sets **206** comprises pre-kitting no more than four plies. Pre-kitting can comprise any desirable quantity of plies. In some illustrative examples, pre-kitting small ply quantities allows for easier forming.

Lay-up **272** generates plurality of pre-kitted ply sets **206.** In some illustrative examples, lay-up **272** takes place on lay-up tool **280** having a desired curvature. In some illustrative examples, lay-up **272** takes place on a flat layup surface. After lay-up **272,** plurality of pre-kitted ply sets **206** are pre-consolidated in pre-consolidation **278.** In some illustrative examples, pick and place **274** lifts a respective pre-kitted ply set of plurality of pre-kitted ply sets **206** after lay-up **272.** Pick and place **274** can lift a respective pre-kitted ply set from a layup surface and place the pre-kitted ply set on lay-up tool **280** for pre-forming. Pick and place **274** can lift a respective pre-kitted ply set from lay-up tool **280** after pre-forming.

As depicted, composite structure **202** comprises plurality of pre-kitted ply sets **206** with a same ply layup, ply layup **214,** positioned to form continuous plies **204.** Each pre-kitted ply set of plurality of pre-kitted ply sets **206** comprises a first ply having first shape **220** and an overhang on a first side of ply layup **214,** and a second ply overlying the first ply, the second ply having second shape **225.**

As depicted, plurality of pre-kitted ply sets **206** comprises pre-kitted ply set **208** and pre-kitted ply set **210.** Pre-kitted ply set **208** comprises first ply **218** having first shape **220** and overhang **221** on a first side of ply layup **214.** Pre-kitted ply set **208** comprises second ply **224** overlying first ply **218** and having second shape **225.** First ply **218** has first ply angle **219.** Second ply **224** has second ply angle **226.** First ply **218** has first ply angle **219** different from second ply angle **226** of second ply **224.** First ply angle **219** can be selected from any non-zero degree angle. In some illustrative examples, first ply angle **219** is selected from at least one of 30 degrees, +45 degrees, 60 degrees, -45 degrees, or 90 degrees.

First shape **220** can take any desirable form. In some illustrative examples, first shape **220** is a parallelogram. Second shape **225** can take any desirable form. In some illustrative examples, second shape **225** is a square.

In this illustrative example, second shape **225** has a portion overlapping a portion of first shape **220** within each pre-kitted ply set of plurality of pre-kitted ply sets **206.** In this illustrative example, second ply **224** has overlap **222** over first ply **218.**

In some illustrative examples, each pre-kitted ply set further comprises a third ply overlying the second ply, the third ply having third shape **232** and an overhang on a second side of ply layup **214.** In this illustrative example, pre-kitted ply set **208** comprises third ply **230** overlying second ply **224.** Third ply **230** comprises third shape **232** and has third ply angle **231.** A portion of third ply **230** extends over second ply **224** to form overhang **233.** In some illustrative examples, third shape **232** comprises a parallelogram.

In some illustrative examples, third shape **232** has a portion overlapping a portion of second shape **225** and a portion of first shape **220** within each pre-kitted ply set of plurality of pre-kitted ply sets **206.**

To form continuous plies **204,** pre-kitted ply set **210** is positioned to abut pre-kitted ply set **208.** In this illustrative example, first ply **234** is positioned to abut first ply **218.** Second ply **240** is positioned to abut second ply **224.** Third ply **244** is positioned to abut third ply **230.** A portion of second ply **240** overlaps a portion of first ply **234** to form overlap **238.** A portion of third ply **244** overlaps both second ply **240** and first ply **234.** First ply **218** and first ply **234** form a first continuous ply having first ply angle **219.** Second ply **224** and second ply **240** form a second continuous ply having second ply angle **226.** Third ply **230** and third ply **244** form a third continuous ply having third ply angle **231.**

In this illustrative example, composite structure **202** further comprises pre-kitted ply end set **212** abutting one pre-kitted ply set of plurality of pre-kitted ply sets **206.** Pre-kitted ply end set **212** comprises first ply **248** having fourth shape **250.** First ply of plurality of pre-kitted ply sets **206** and the first ply of pre-kitted ply end set **212** comprise the same ply angle, first ply angle **219.** In this illustrative example, pre-kitted ply end set **212** has ply layup **216.** Ply layup **216** comprises first ply **248** and third ply **256.** Third ply **256** has fifth shape **258** and third ply angle **231.** First ply **248** has overhang **252.** Third ply **256** has overlap **254** over first ply **248.** Pre-kitted ply end set **212** creates a desired shape for an end of continuous plies **204.**

In some illustrative examples, an additional plurality of pre-kitted ply sets (not depicted) with a same ply layup as plurality of pre-kitted ply sets **206,** ply layup **214,** is present. In some illustrative examples, the additional plurality of pre-kitted ply sets is positioned adjacent to plurality of pre-kitted ply sets **206** to extend continuous plies **204.**

In some illustrative examples, composite structure **202** further comprises second set of continuous plies **262.** Second set of continuous plies **262** is formed by second plurality of pre-kitted ply sets **264.** Second plurality of pre-kitted ply sets **264** have a same ply layup, second ply layup **266.**

In some illustrative examples, composite structure **202** further comprises zero degree ply **260** positioned over an intersection region of two pre-kitted ply sets of plurality of pre-kitted ply sets **206.** For example, zero degree ply **260** may be positioned over an intersection region of pre-kitted ply set **208** and pre-kitted ply set **210.**

In some illustrative examples, composite structure **202** further comprises second plurality of pre-kitted ply sets **264** with second ply layup **266** positioned to form second set of continuous plies **262** over plurality of pre-kitted ply sets **206.** In some illustrative examples, each pre-kitted ply set of second plurality of pre-kitted ply sets **264** comprises first additional ply **268** having first additional shape **269** and an overhang on a first side of the second ply layup, second ply layup **266.** Second plurality of pre-kitted ply sets **264** further comprises second additional ply **270** overlying first additional ply **268,** second additional ply **270** having second additional shape **271.**

In some illustrative examples, first ply **218,** second ply **224,** first additional ply **268,** and second additional ply **270** each have different respective ply angles.

Composite structure **202** plurality of pre-kitted ply sets **206** is ultrasonically tacked together. In some illustrative examples, composite structure **202** comprises a thermoplastic composite structure **288.** In these illustrative examples, thermoplastic composite structure **288** and plurality of pre-kitted ply sets **206** comprise thermoplastic material **284.** In some illustrative examples, plurality of pre-kitted ply sets **206** comprises one of thermoset plies **286** or dry fiber plies **285.**

Each pre-kitted ply set of plurality of pre-kitted ply sets **206** is pre-consolidated and pre-formed into a desired out of plane curvature. In these illustrative examples, in processing pre-kitted ply set **206,** first ply **218** and second ply **224** are laid up lay-up tool **280** in lay-up **272.** Afterwards, curvature **294** is pre-formed into first ply **218** and second ply **224** during pre-forming **292.** Curvature **294** is specific to pre-kitted ply set **208** and its desired location in composite structure **202.** Curvature **294** is out of plane for the plies of composite structure **202.** Curvature **294** may also be referred to as an out of plane curvature or an out of plane shape. Curvature **294** is based on a desired location for pre-kitted ply set **208** on consolidation tool **282** for composite structure **202.** In some illustrative examples, curvature **294** is a near net shape.

Pre-kitted ply set **208** is pre-consolidated prior to placement on consolidation tool **282.** Pre-consolidating **290** first ply **218** and second ply **224** reduces the pressure for consolidating plurality of pre-kitted ply sets to form composite structure **202** on consolidation tool **282.**

In some illustrative examples, composite structure **202** is thermoplastic composite structure **288,** and each pre-kitted ply set of plurality of pre-kitted ply sets **206** further comprises at least one low temperature thermoplastic material on an outside of the pre-kitted ply set and in contact with at least one of the first ply or the second ply. For example, low temperature thermoplastic material **296** is present in pre-kitted ply set **208.** Low temperature thermoplastic material **296** can be on an outside of pre-kitted ply set **208** and in contact with at least one of first ply **218** or second ply **224.** Low temperature thermoplastic material **296** can add in reducing the energy for temperature and pressure applied to consolidating composite structure **202** on consolidation tool **282.**

The illustration of manufacturing environment **200 in** **Figures 2A** and **2B** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, in some illustrative examples, other quantities of plies can be present in plurality of pre-kitted ply sets **206.** In another illustrative example, ply layup **214** can include only two plies. In some illustrative examples, ply layup **214** can include four plies.

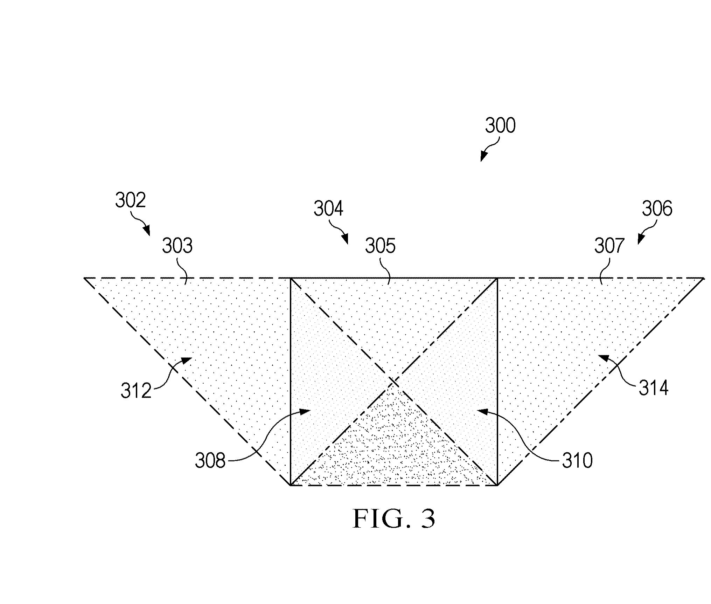

Turning now to **Figure 3****,** an illustration of a top view of a pre-kitted ply set is depicted in accordance with an illustrative embodiment. Pre-kitted ply set **300** is a physical implementation of pre-kitted ply set **208 of** **Figures 2A** and **2B****.**

In some illustrative examples, pre-kitted ply set **300** has been heated, formed, and consolidated. By being pre-consolidated and formed, layup time on a large consolidation tool for the structure is reduced.

First ply **302** has first shape **303.** In this illustrative example, first shape **303** comprises a parallelogram. In this illustrative example, the parallelogram has a top acute angle to the left. First ply **302** has any desirable first ply angle. In some illustrative examples, the first ply angle is selected from at least one of 30 degrees, +45 degrees, 60 degrees, -45 degrees, or 90 degrees. In some illustrative examples, the first ply angle is -45 degrees.

Second ply **304** has second shape **305.** In this illustrative example, second shape **305** comprises a square. In this illustrative example, part of second ply **304** is positioned beneath a portion of first ply **302,** resulting in overlap **308.** Second ply **304** has any desirable second ply angle different from the first ply angle. In some illustrative examples, the second ply angle is selected from at least one of 30 degrees, +45 degrees, 60 degrees, -45 degrees, or 90 degrees. In some illustrative examples, the second ply angle is 90 degrees.

Third ply **306** has third shape **307.** In this illustrative example, third shape **307** comprises a parallelogram. In this illustrative example, the parallelogram has a top acute angle to the right. In this illustrative example, first shape **303** is a mirror image of third shape **307.** In this illustrative example, second ply **304** is positioned above a portion of third ply **306,** resulting in overlap **310.** Third ply **306** has any desirable third ply angle different from the first ply angle and second ply angle. In some illustrative examples, the third ply angle is selected from at least one of 30 degrees, +45 degrees, 60 degrees, -45 degrees, or 90 degrees. In some illustrative examples, the third ply angle is 45 degrees.

A portion of first ply **302** extends out over second ply **304** resulting in overhang **312.** A portion of third ply **306** extends out from under second ply **304** resulting in overhang **314.**

First ply **302,** second ply **304,** and third ply 306 are designed and laid up to allow for assembling pre-kitted ply set **300** side by side with another pre-kitted ply set on a forming tool.

In some illustrative examples, pre-kitted ply set **300** is a preformed and pre-consolidated pack of thermoplastic plies. Pre-kitted ply set **300** can be used as a portion of a large-scale part deposition and consolidation.

In some illustrative examples, the pre-kitted ply set is consolidated in a press. In some illustrative examples, the pre-kitted ply set is vacuum consolidated. In some illustrative examples, the pre-kitted ply set is placed in an envelope bag and consolidated. In some illustrative examples, pressure greater than vacuum can be used, if desired.

Pre-kitted ply set **300** could have been heated in an envelope bag or on an adaptable forming tool or table. The small quantity of plies in pre-kitted ply set 300 allows for minimum pressure forming.

In some illustrative examples, pre-kitted ply set **300** is directly picked and placed to storage. In some illustrative examples, the pre-kitted ply set is picked and placed to a forming machine, such as an adaptive forming table. In some illustrative examples, the pre-kitted ply set is picked and placed as plies without a bag or other handling materials. In some illustrative examples, the pre-kitted ply set is picked and placed while within an envelope bag.

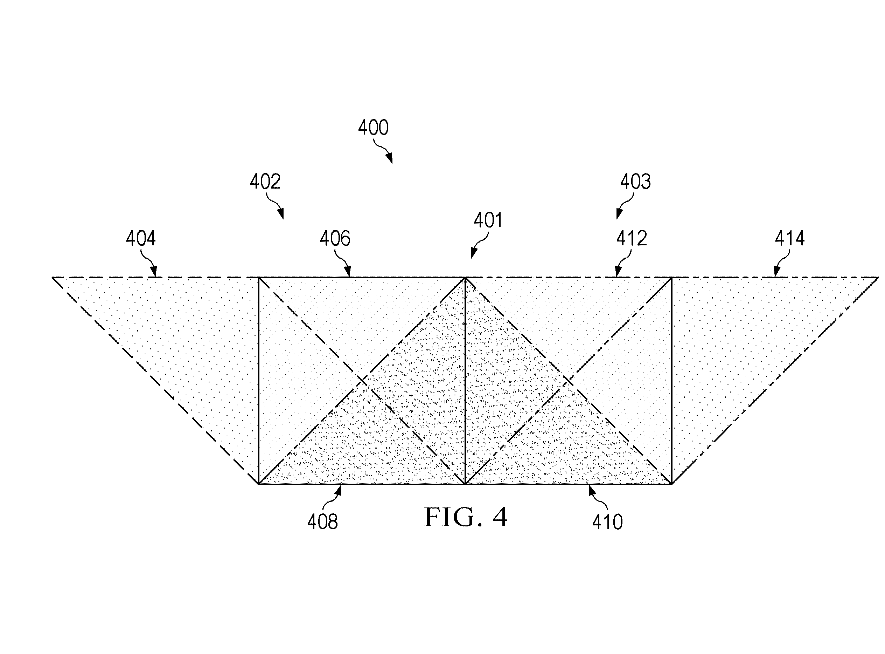

Turning now to **Figure 4****,** an illustration of a top view of a plurality of pre-kitted ply sets is depicted in accordance with an illustrative embodiment. Pre-kitted ply set **402** is a physical implementation of pre-kitted ply set **208 of** **Figures 2A** and **2B****.** Pre-kitted ply set 403 is a physical implementation of pre-kitted ply set **210 of** **Figures 2A** and **2B****.**

In view **400,** plurality of pre-kitted ply sets **401** is depicted. Plurality of pre-kitted ply sets **401** comprises pre-kitted ply set **402** and pre-kitted ply set **403** with a same layup. In this illustrative example, either of pre-kitted ply set **402** and pre-kitted ply set **403** can be the same as pre-kitted ply set **300.** Pre-kitted ply set **402** comprises first ply **404,** second ply **406,** and third ply **408.** Pre-kitted ply set **403** comprises first ply **410,** second ply **412,** and third ply **414.**

First ply **404** and first ply **410** have a same first shape. In this illustrative example, the first shape is a parallelogram. First ply **404** and first ply **410** have a same first ply angle. Pre-kitted ply set **403** is positioned such that first ply **410** abuts first ply **404** to form a first layer of material.

Second ply **406** and second ply **412** have a same second shape. In this illustrative example, the second shape is a square. Second ply **406** and second ply **412** have a same second ply angle. Pre-kitted ply set **403** is positioned such that second ply **412** abuts second ply **406** to form a second layer of material.

Third ply **408** and third ply **414** have a same third shape. In this illustrative example, the third shape is a parallelogram. Third ply **408** and third ply **414** have a same third ply angle. Pre-kitted ply set **403** is positioned such that third ply **414** abuts third ply **408** to form a third layer of material.

In some illustrative examples, each of plurality of pre-kitted ply sets **401** is pre-formed to a designated shape prior to placement on a tool. In some illustrative examples, each of plurality of pre-kitted ply sets **401** is pre-formed to a designated shape prior to positioning abutting each other. In some illustrative examples, pre-kitted ply set **402** and pre-kitted ply set **403** are formed to different curvatures.

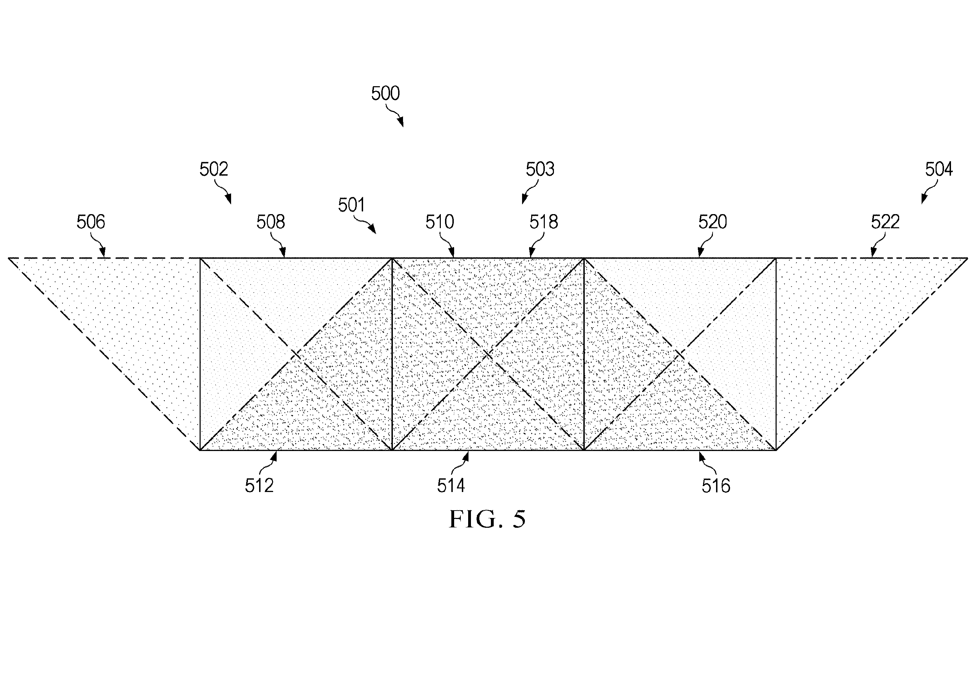

Turning now to **Figure 5****,** an illustration of a top view of a plurality of pre-kitted ply sets is depicted in accordance with an illustrative embodiment. Plurality of pre-kitted ply sets **501** is a physical implementation of plurality of pre-kitted ply sets **206 of** **Figures 2A** and **2B****.**

In view **500,** plurality of pre-kitted ply sets **501** is depicted. Plurality of pre-kitted ply sets **501** comprises pre-kitted ply set **502,** pre-kitted ply set **503,** and pre-kitted ply set **504** with a same layup. In this illustrative example, any of pre-kitted ply set **502,** pre-kitted ply set **503,** and pre-kitted ply set **504** can be the same as pre-kitted ply set **300.**

Plurality of pre-kitted ply sets **501** is forming continuous plies. First ply **506** of pre-kitted ply set **502,** first ply **508** of pre-kitted ply set **503,** and first ply **510** of pre-kitted ply set **504** form a first continuous ply. Second ply **512** of pre-kitted ply set **502,** second ply **514** of pre-kitted ply set **503,** and second ply **516** of pre-kitted ply set **504** form a second continuous ply. Third ply **518** of pre-kitted ply set **502,** third ply **520** of pre-kitted ply set **503,** and third ply **522** of pre-kitted ply set **504** form a third continuous ply.

First ply **506,** first ply **508,** and first ply **510** have a same first shape. In this illustrative example, the first shape is a parallelogram. First ply **506,** first ply **508,** and first ply **510** have a same first ply angle to form the first continuous ply. Pre-kitted ply set **503** is positioned such that first ply **508** abuts first ply **506.** Pre-kitted ply set **504** is positioned such that first ply **510** abuts first ply **508.**

Second ply **512,** second ply **514,** and second ply **516** have a same second shape. In this illustrative example, the second shape is a square. Second ply **512,** second ply **514,** and second ply **516** have a same second ply angle to form the second continuous ply. Pre-kitted ply set **503** is positioned such that second ply **514** abuts second ply **512.** Pre-kitted ply set **504** is positioned such that second ply **516** abuts second ply **514.**

Third ply **518,** third ply **520,** and third ply **522** have a same third shape. In this illustrative example, the third shape is a parallelogram. Third ply **518,** third ply **520,** and third ply **522** have a same third ply angle to form the third continuous ply. Pre-kitted ply set **503** is positioned such that third ply **520** abuts third ply **518.** Pre-kitted ply set **504** is positioned such that third ply **522** abuts third ply **520.**

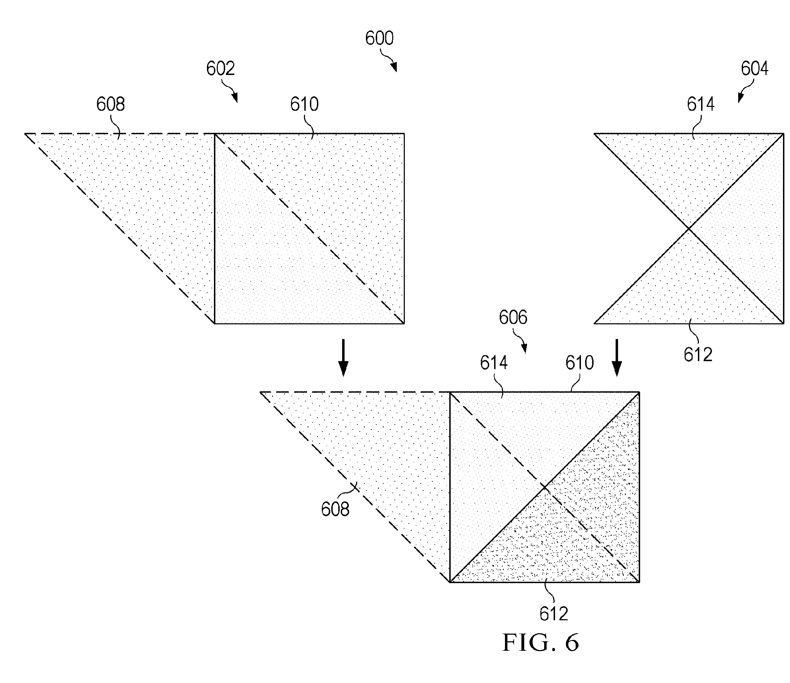

Turning now to **Figure 6****,** an illustration of a top view of a pre-kitted ply end set is depicted in accordance with an illustrative embodiment. Pre-kitted ply end set **606** is a physical implementation of pre-kitted ply end set **212 of** **Figures 2A** and **2B****.**

Pre-kitted ply end set **606** is formed using four plies. Pre-kitted ply end set **606** is formed by combining plies **602** and plies **604.** Plies **602** comprises first ply **608** and second ply **610.** In some illustrative examples, first ply **608** has a first shape and first ply angle the same as previously laid up pre-kitted ply sets, such as pre-kitted ply set **300,** pre-kitted ply set **402,** pre-kitted ply set **403,** pre-kitted ply set **502,** pre-kitted ply set **503,** or pre-kitted ply set **504.** In some illustrative examples, second ply **610** has a second shape and second ply angle the same as previously laid up pre-kitted ply sets, such as pre-kitted ply set **300,** pre-kitted ply set **402,** pre-kitted ply set **403,** pre-kitted ply set **502,** pre-kitted ply set **503,** or pre-kitted ply set **504.**

Plies **604** comprises first ply **614** and third ply **612.** First ply **614** has fourth shape and first ply angle. First ply **614** abuts a previous first ply with the first ply angle. In this illustrative example, first ply **614** abuts first ply **608** in pre-kitted ply end set **606.** Fourth shape of first ply **614** creates a neat ply edge. Although fourth shape comprises ninety degree angles to create a neat ply edge, the fourth shape can comprise any desirable shape.

Third ply **612** has a fifth shape and third ply angle. Third ply **612** will abut a previous third ply with the third ply angle. Fifth shape of third ply **612** creates a neat ply edge. Although fifth shape comprises ninety degree angles to create a neat ply edge, the fifth shape can comprise any desirable shape.

Plies **602** and plies **604** are combined to form pre-kitted ply end set **606.** Pre-kitted ply end set **606** can be placed to abut a pre-kitted ply set such as one of pre-kitted ply set **300,** pre-kitted ply set **402,** pre-kitted ply set **403,** pre-kitted ply set **502,** pre-kitted ply set **503,** or pre-kitted ply set **504.**

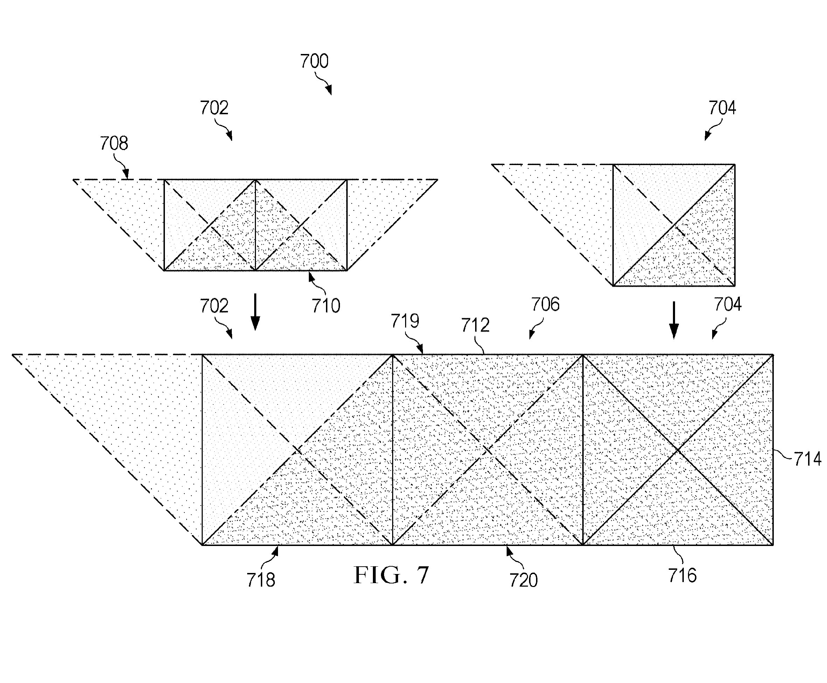

Turning now to **Figure 7****,** an illustration of a top view of a plurality of pre-kitted ply sets and a pre-kitted ply end set is depicted in accordance with an illustrative embodiment. In view **700,** plurality of pre-kitted ply sets **702** is combined with pre-kitted ply end set **704** to form composite layup **706.** Plurality of pre-kitted ply sets **702** comprises pre-kitted ply set **708** and pre-kitted ply set **710.** Pre-kitted ply set **708** and pre-kitted ply set **710** have the same layup. Pre-kitted ply end set **704** is configured to provide neat edges for each ply of pre-kitted ply set **710.**

Composite layup **706** comprises first continuous ply **718,** second continuous ply **719,** and third continuous ply **720.** The combination of pre-kitted ply set **708,** pre-kitted ply set **710,** and pre-kitted ply end set **704** form edge **712,** edge **714,** and edge **716.** Each of edge **712,** edge **714,** and edge **716** can have any desirable shape. In some illustrative examples, additional pre-kitted ply sets can be laid up to abut at least one of edge **712** or edge **716.**

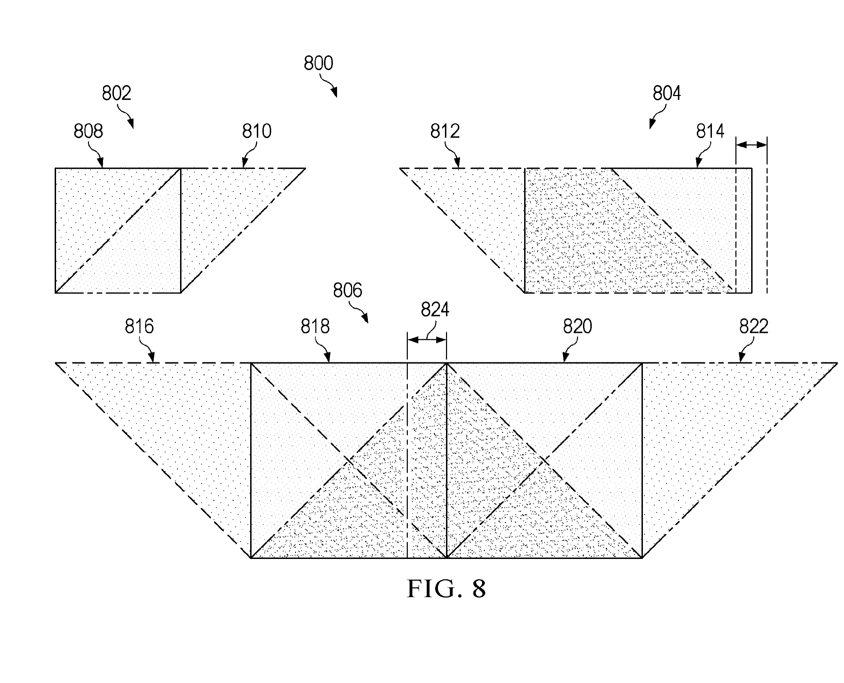

Turning now to **Figure 8****,** an illustration of a top view of a plurality of pre-kitted ply sets and a second plurality of pre-kitted ply sets is depicted in accordance with an illustrative embodiment. In view **800,** multiple instances of pre-kitted ply set design **802** and pre-kitted ply set design **804** are combined to form plurality of pre-kitted ply sets **806.** Pre-kitted ply set design **802** comprises second ply **808** having second shape and second ply angle and third ply **810** having third shape and third ply angle. Pre-kitted ply set design **804** comprises zero degree ply **814** and first ply **812** having first shape and first ply angle. Plurality of pre-kitted ply sets **806** comprises first pre-kitted ply set **816,** second pre-kitted ply set **818,** third pre-kitted ply set **820,** and second additional pre-kitted ply set **822.** First pre-kitted ply set **816** and second pre-kitted ply set **818** have a same design as pre-kitted ply set design **804.** By abutting first pre-kitted ply set **816** and second pre-kitted ply set **818,** zero degree plies have overlap **824.** Third pre-kitted ply set **820** and second additional pre-kitted ply set **822** have a same design as pre-kitted ply set design **802.**

In this illustrative example, pre-kitted ply set design **804** can be considered a second plurality of pre-kitted ply sets with a second ply layup positioned to form a second set of continuous plies over the plurality of pre-kitted ply sets. Each pre-kitted ply set of the second plurality of pre-kitted ply sets comprises a first additional ply having a first additional shape and an overhang on a first side of the second ply layup, and a second additional ply overlying the first additional ply, the second additional ply having a second additional shape. In some illustrative examples, first ply **812,** second ply **808,** third ply **810,** and zero degree ply **814** each have a different respective ply angle. In some illustrative examples, the respective ply angles are selected from at least one of 30 degrees, +45 degrees, 60 degrees, -45 degrees, or 90 degrees.

In some illustrative examples, second ply **808** has a second ply angle of 90 degrees. In some illustrative examples, third ply **810** has a third ply angle of 45 degrees. In some illustrative examples, first ply **812** has a first ply angle of -45 degrees.

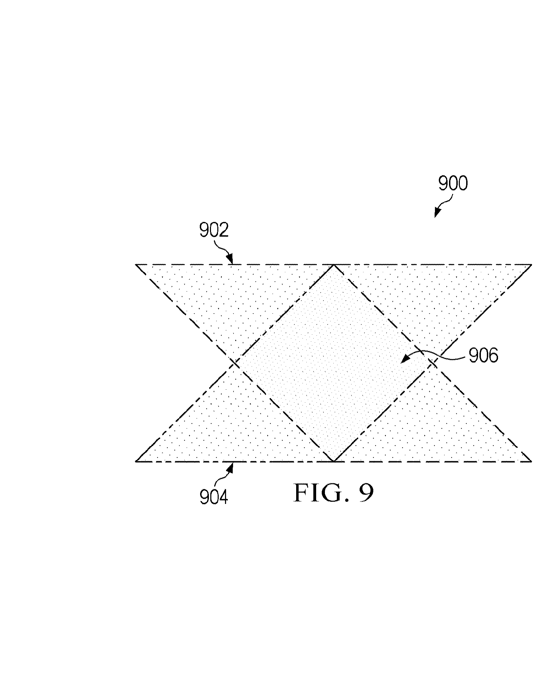

Turning now to **Figure 9****,** an illustration of a top view of a pre-kitted ply set is depicted in accordance with an illustrative embodiment. Pre-kitted ply set **900** is a physical implementation of pre-kitted ply set **208** of **Figures 2A** and **2B****.**

In some illustrative examples, pre-kitted ply set **900** has been heated, pre-formed, and pre-consolidated. By being pre-consolidated and formed, layup time on a large consolidation tool for the structure is reduced.

First ply **902** has a first shape and a first ply angle. In this illustrative example, the first shape is a triangle. First ply **902** has any desirable first ply angle. In some illustrative examples, the first ply angle is selected from at least one of 30 degrees, +45 degrees, 60 degrees, -45 degrees, or 90 degrees. In some illustrative examples, the first ply angle is -45 degrees.

Second ply **904** has a second shape. In this illustrative example, the second shape comprises a triangle. In this illustrative example, part of second ply **904** is positioned over a portion of first ply **902,** resulting in overlap **906.** Second ply **904** has any desirable second ply angle different from the first ply angle. In some illustrative examples, the second ply angle is selected from at least one of 30 degrees, +45 degrees, 60 degrees, -45 degrees, or 90 degrees. In some illustrative examples, the second ply angle is 45 degrees.

Both first ply **902** and second ply **904** have overhangs. Portions of each of first ply **902** and second ply **904** extend out from the other respective ply, resulting in overhangs.

First ply **902** and second ply **904** are designed and laid up to allow for assembling pre-kitted ply set **900** side by side with another pre-kitted ply set on a forming tool.

In some illustrative examples, pre-kitted ply set **900** is a preformed and pre-consolidated pack of thermoplastic plies. Pre-kitted ply set **900** can be used as a portion of a large-scale part deposition and consolidation.

In some illustrative examples, the pre-kitted ply set is consolidated in a press. In some illustrative examples, the pre-kitted ply set is vacuum consolidated. In some illustrative examples, the pre-kitted ply set is placed in an envelope bag and consolidated. In some illustrative examples, pressure greater than vacuum can be used, if desired.

Pre-kitted ply set **900** could have been heated in an envelope bag or on an adaptable forming tool or table. The small quantity of plies in pre-kitted ply set **900** allows for minimum pressure forming.

In some illustrative examples, pre-kitted ply set **900** is directly picked and placed to storage. In some illustrative examples, the pre-kitted ply set is picked and placed to a forming machine, such as an adaptive forming table. In some illustrative examples, the pre-kitted ply set is picked and placed as plies without a bag or other handling materials. In some illustrative examples, the pre-kitted ply set is picked and placed while within an envelope bag.

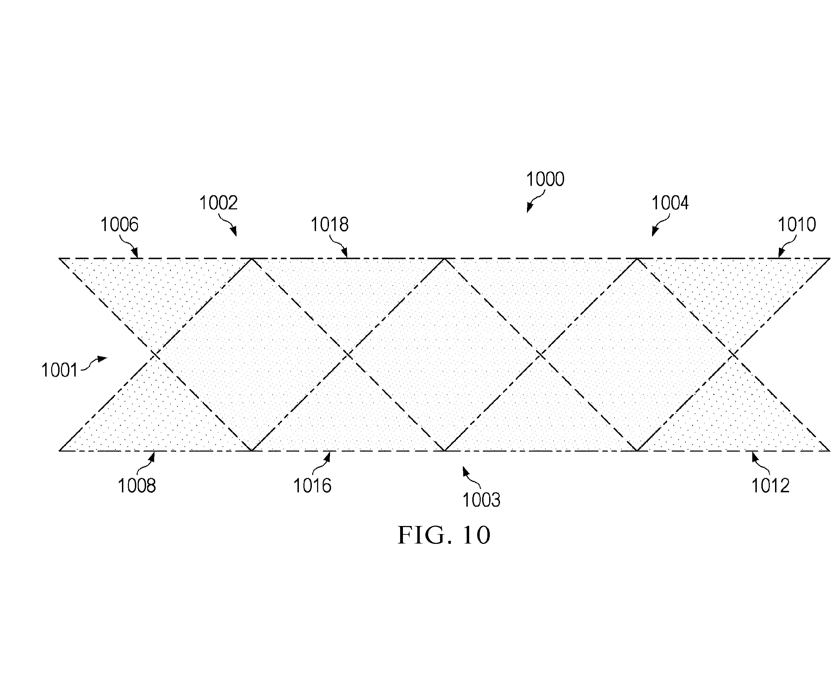

Turning now to **Figure 10****,** an illustration of a top view of a plurality of pre-kitted ply sets is depicted in accordance with an illustrative embodiment. Pre-kitted ply set **1002** is a physical implementation of pre-kitted ply set **208 of** **Figures 2A** and **2B****.** Pre-kitted ply set **1003** is a physical implementation of pre-kitted ply set **210 of** **Figures 2A** and **2B****.**

In view **1000,** plurality of pre-kitted ply sets **1001** is depicted. Plurality of pre-kitted ply sets **1001** comprises pre-kitted ply set **1002** and pre-kitted ply set **1004** with a same layup. In this illustrative example, either of pre-kitted ply set **1002** and pre-kitted ply set **1004** can be the same as pre-kitted ply set **900.** Pre-kitted ply set **1002** comprises first ply **1006** and second ply **1008.** Pre-kitted ply set **1004** comprises first ply **1010** and second ply **1012.** In this illustrative example, pre-kitted ply set **1002** and pre-kitted ply set **1004** have a same orientation.

In this illustrative example, plurality of pre-kitted ply sets **1001** further comprises pre-kitted ply set **1003.** Pre-kitted ply set **1003** comprises first ply **1014** and second ply **1016.** Pre-kitted ply set **1003** is rotated 180 degrees relative to pre-kitted ply set **1002** and pre-kitted ply set **1004.**

First ply **1006,** first ply **1010,** and first ply **1014** have a same first shape. In this illustrative example, the first shape is a triangle. First ply **1006,** first ply **1010,** and first ply **1014** have a same first ply angle. Pre-kitted ply set **1003** is positioned such that first ply **1014** abuts first ply **1006** to form a first layer of material.

Second ply **1008,** second ply **1012,** and second ply **1016** have a same second shape. In this illustrative example, the second shape is a triangle. Second ply **1008,** second ply **1012,** and second ply **1016** have a same second ply angle. Pre-kitted ply set **1003** is positioned such that second ply **1016** abuts second ply **1008** to form a second layer of material.

In some illustrative examples, each of plurality of pre-kitted ply sets **1001** is pre-formed to a designated shape prior to placement on a tool. In some illustrative examples, each of plurality of pre-kitted ply sets **1001** is pre-formed to a designated shape prior to positioning abutting each other. In some illustrative examples, pre-kitted ply set **1002,** pre-kitted ply set **1003,** and pre-kitted ply set **1004** are formed to different curvatures.

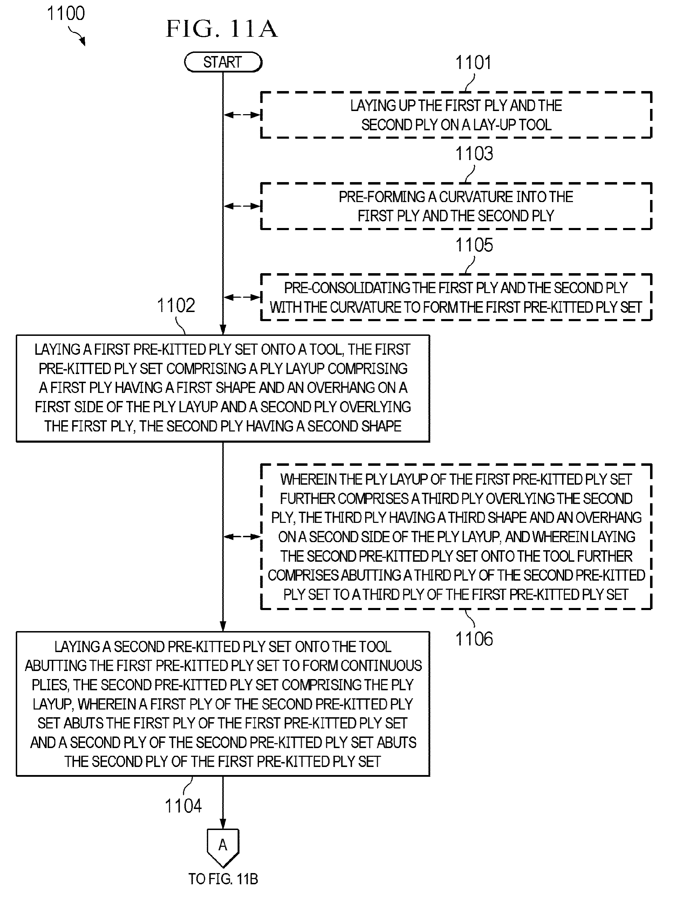

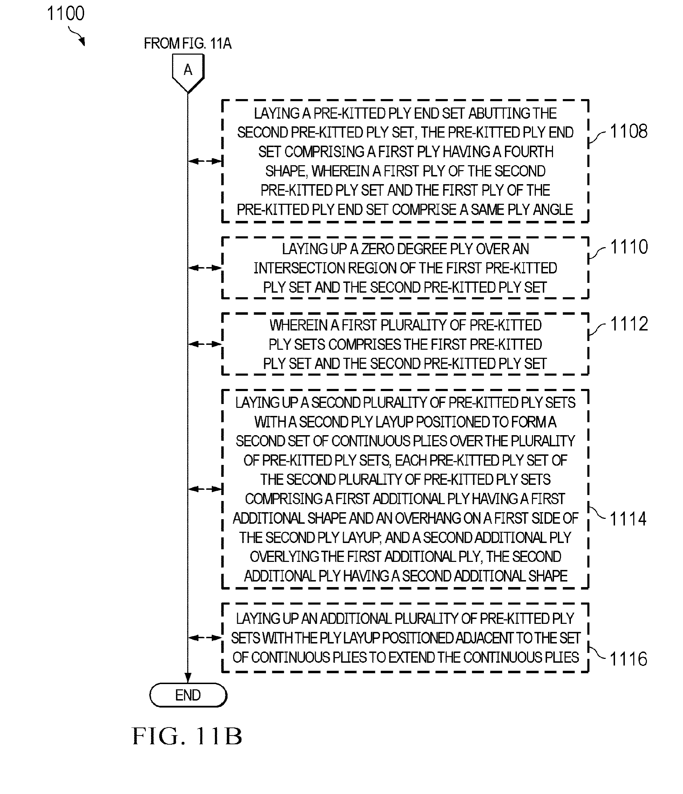

Turning now to **Figures 11A** and **11B****,** a flowchart of a method of forming a composite structure is depicted in accordance with an illustrative embodiment. Method **1100** can be used to form a composite structure of aircraft **100** of **Figure 1****.** Method **1100** can be used to form continuous plies **204** of **Figures 2A** and **2B****.** Pre-kitted ply set **300** of **Figure 3** can be used in method **1100.** Pre-kitted ply set **300** can be used in method **1100.** Pre-kitted ply set **402** and pre-kitted ply set **403** of **Figure 4** can be used in method **1100.** Plurality of pre-kitted ply sets **501** of **Figure 5** can be used in method **1100.** Pre-kitted ply end set **606** of **Figure 6** can be used in method **1100.** Pre-kitted ply set **702** and pre-kitted ply end set **704** of **Figure 7** can be used in method **1100.** Pre-kitted ply set design **802** and pre-kitted ply set design **804** of **Figure 8** can be used in method **1100.**

Method **1100** lays a first pre-kitted ply set onto a tool, the first pre-kitted ply set comprising a ply layup comprising a first ply having a first shape and an overhang on a first side of the ply layup and a second ply overlying the first ply, the second ply having a second shape (operation **1102).** The first pre-kitted ply set is pre-consolidated. In some illustrative examples, the first pre-kitted ply set is pre-formed to a desired curvature.

Method **1100** lays a second pre-kitted ply set onto the tool abutting the first pre-kitted ply set to form continuous plies, the second pre-kitted ply set comprising the ply layup, wherein a first ply of the second pre-kitted ply set abuts the first ply of the first pre-kitted ply set and a second ply of the second pre-kitted ply set abuts the second ply of the first pre-kitted ply set (operation **1104).** Afterwards, method **1100** terminates.

In some illustrative examples, method **1100** lays up the first ply and the second ply on a lay-up tool (operation **1101).** In some illustrative examples, method **1100** pre-forms a curvature into the first ply and the second ply (operation **1103).** In some illustrative examples, method **1100** pre-consolidates the first ply and the second ply with the curvature to form the first pre-kitted ply set (operation **1105).**

In some illustrative examples, the ply layup of the first pre-kitted ply set further comprises a third ply overlying the second ply, the third ply having a third shape and an overhang on a second side of the ply layup, and wherein laying the second pre-kitted ply set onto the tool further comprises abutting a third ply of the second pre-kitted ply set to a third ply of the first pre-kitted ply set (operation **1106).**

In some illustrative examples, method **1100** lays a pre-kitted ply end set abutting the second pre-kitted ply set, the pre-kitted ply end set comprising a first ply having a fourth shape, wherein a first ply of the second pre-kitted ply set and the first ply of the pre-kitted ply end set comprise a same ply angle (operation **1108).**

In some illustrative examples, method **1100** lays up a zero degree ply over an intersection region of the first pre-kitted ply set and the second pre-kitted ply set (operation **1110).**

In some illustrative examples, a plurality of pre-kitted ply sets comprises the first pre-kitted ply set and the second pre-kitted ply set (operation **1112).** In some illustrative examples, method **1100** lays up a second plurality of pre-kitted ply sets with a second ply layup positioned to form a second set of continuous plies over the plurality of pre-kitted ply sets, each pre-kitted ply set of the second plurality of pre-kitted ply sets comprising: a first additional ply having a first additional shape and an overhang on a first side of the second ply layup; and a second additional ply overlying the first additional ply, the second additional ply having a second additional shape (operation **1114).**

In some illustrative examples, the plurality of pre-kitted ply sets comprises the first pre-kitted ply set and the second pre-kitted ply set. In some illustrative examples, method **1100** lays up an additional plurality of pre-kitted ply sets with the ply layup positioned adjacent to the set of continuous plies to extend the continuous plies (operation **1116).**

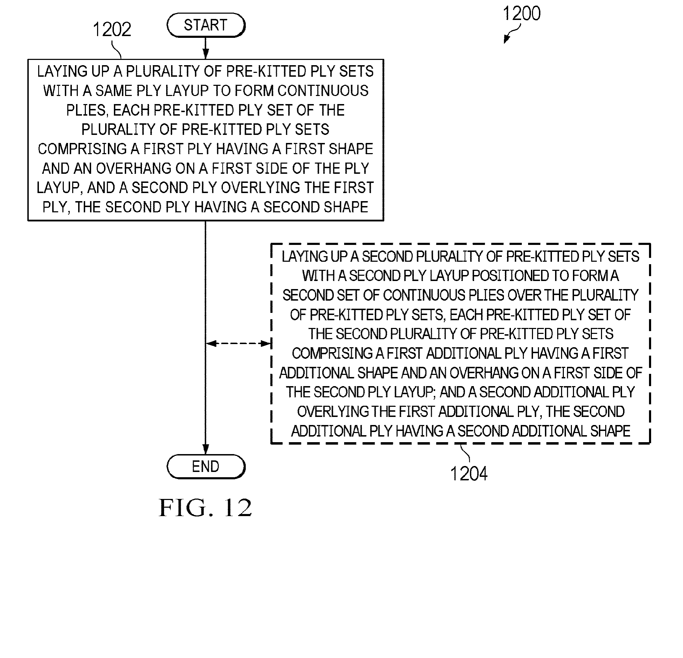

Turning now to **Figure 12****,** a flowchart of a method of forming a composite structure is depicted in accordance with an illustrative embodiment. Method **1200** can be used to form a composite structure of aircraft **120** of **Figure 1****.** Method **1200** can be used to form continuous plies **204** of **Figures 2A** and **2B****.** Pre-kitted ply set **300** of **Figure 3** can be used in method **1200.** Pre-kitted ply set **402** and pre-kitted ply set **403** of **Figure 4** can be used in method **1200.** Plurality of pre-kitted ply sets **501 of** **Figure 5** can be used in method **1200.** Pre-kitted ply end set **606 of** **Figure 6** can be used in method **1200.** Pre-kitted ply set **702** and pre-kitted ply end set **704 of** **Figure 7** can be used in method **1200.** Pre-kitted ply set design **802** and pre-kitted ply set design **804** of **Figure 8** can be used in method **1200.**

Method **1200** lays up a plurality of pre-kitted ply sets with a same ply layup to form continuous plies, each pre-kitted ply set of the plurality of pre-kitted ply sets comprising a first ply having a first shape and an overhang on a first side of the ply layup, and a second ply overlying the first ply, the second ply having a second shape (operation **1202).** Afterwards, method **1200** terminates.

In some illustrative examples, method **1200** lays up a second plurality of pre-kitted ply sets with a second ply layup positioned to form a second set of continuous plies over the plurality of pre-kitted ply sets, each pre-kitted ply set of the second plurality of pre-kitted ply sets comprising a third ply having a third shape and an overhang on a first side of the second ply layup; and a second additional ply overlying the third ply, the second additional ply having a second additional shape (operation **1204).** In these illustrative examples, the second plurality of pre-kitted ply sets can be considered to be on top of the plurality of pre-kitted ply sets through the thickness of the layup.

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, any of operation **1106** through operation **1116** may be optional. As another example, operation **1204** may be optional.

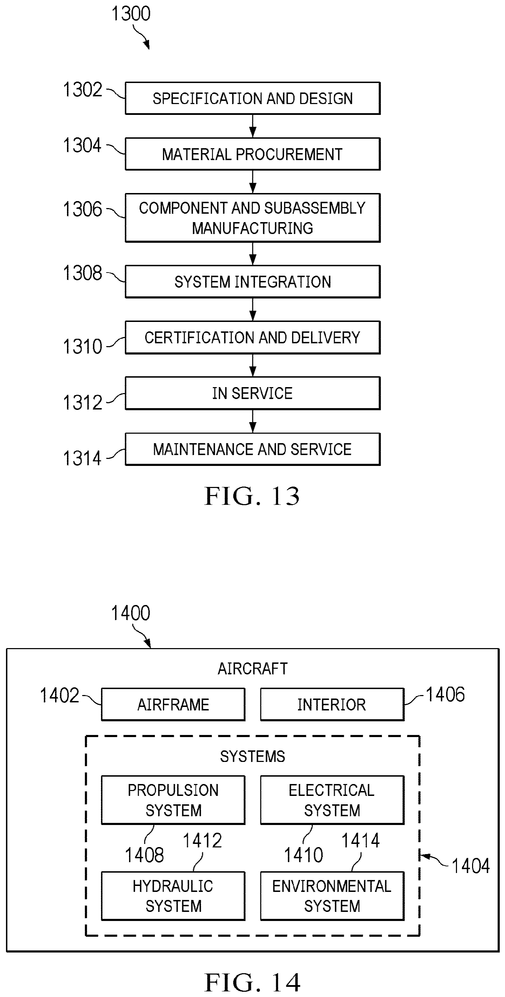

Illustrative embodiments of the present disclosure may be described in the context of aircraft manufacturing and service method **1300** as shown in **Figure 13** and aircraft **1400** as shown in **Figure 14****.** Turning first to **Figure 13****,** an illustration of an aircraft manufacturing and service method in a form of a block diagram is depicted in accordance with an illustrative embodiment. During pre-production, aircraft manufacturing and service method **1300** may include specification and design **1302** of aircraft **1400** in **Figure 14** and material procurement **1304.**

During production, component and subassembly manufacturing **1306** and system integration **1308** of aircraft **1400** takes place. Thereafter, aircraft **1400** may go through certification and delivery **1310** in order to be placed in service **1312.** While in service **1312** by a customer, aircraft **1400** is scheduled for routine maintenance and service **1314,** which may include modification, reconfiguration, refurbishment, or other maintenance and service.

Each of the processes of aircraft manufacturing and service method **1300** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 14****,** an illustration of an aircraft in a form of a block diagram is depicted in which an illustrative embodiment may be implemented. In this example, aircraft **1400** is produced by aircraft manufacturing and service method **1300 of** **Figure 13** and may include airframe **1402** with plurality of systems **1404** and interior **1406.** Examples of systems **1404** include one or more of propulsion system **1408,** electrical system **1410,** hydraulic system **1412,** and environmental system **1414.** Any number of other systems may be included.

Apparatuses and methods embodied herein may be employed during at least one of the stages of aircraft manufacturing and service method **1300.** One or more illustrative embodiments may be manufactured or used during at least one of component and subassembly manufacturing **1306,** system integration **1308,** in service **1312,** or maintenance and service **1314** of **Figure 13****.**

The illustrative examples are directed to building up pre-formed and pre-consolidated packs of thermoplastic plies (offline) to enable feeder lines for large-scale part deposition and consolidation. The illustrative examples provide methods of laying up packs of multiple plies, consolidating and storing as a pre-kit format. In some illustrative examples, at least one method comprises laying +45/90/45 plies (or any off-axis plies) as a pack of three, consolidating and storing as pre-kit format.

In the illustrative examples, to form a large-scale part, the pre-kitted plies are placed on a tool or mandrel. In some illustrative examples, to form a large-scale part, the pre-kitted plies are placed on a flexible forming machine, tacked by ultrasonics and consolidated to shape by applying a bag, heat, and pressure to consolidate into a large-scale component or part.

Pre-kitted plies are placed on a flexible forming machine for consolidation into large scale structure. To create a pre-kitted ply set, a plurality of plies is flat laid up as a pack. In some illustrative examples, +45/90/45 plies (or any other desirable off-axis plies) are laid down as a pack of three.

In some illustrative examples, the pre-kitted ply set is consolidated. In some illustrative examples, the pre-kitted ply set is consolidated in a press. In some illustrative examples, the pre-kitted ply set is vacuum consolidated. In some illustrative examples, the pre-kitted ply set is placed in an envelope bag and consolidated. In some illustrative examples, pressure greater than vacuum can be used, if desired.

In some illustrative examples, the pre-kitted ply set is directly picked and placed to store. In some illustrative examples, the pre-kitted ply set is picked and placed to a forming machine, such as an adaptive forming table. In some illustrative examples, the pre-kitted ply set is picked and placed as plies without a bag or other handling materials. In some illustrative examples, the pre-kitted ply set is picked and placed while within an envelope bag. In some illustrative examples, the pre-kitted ply set can be heated in an envelope bag or can be heated directly by a forming table.

The low quantity of plies in the pre-kitted ply set allow for minimum pressure forming. In some illustrative examples, zero degree plies can be kitted separately or can be placed/deposited directly in the final pack. Ply drops or build-ups are kitted in a similar manner to +45/90/45 packs. If smaller than a second ply planform, zero degree ply plies can be included.

The pre-kitted ply set can be picked from storage and placed on a full consolidation tool. In some illustrative examples, zero degree plies can be deposited as desired. The illustrative examples may splice zero degree ply plies, if allowed, to reduce scale and allow for offline feeder lines.

In some illustrative examples, the heat/pressure may be reduced with the use of low-melt film. In some illustrative examples, the pre-kit format provides for reduced pressure of consolidation.

Pre-kitting thermoplastic packs as in the illustrative examples allows prefabrication on a small scale (smaller scale infrastructure) to enable large scale part production and reduces the amount of monumental equipment. In some illustrative examples, pre-kitting comprises pre-kitting small ply quantities to allow for prefabrication at lower pressures. In some illustrative examples, pre-kitting small ply quantities comprises pre-kitting no more than three plies. In some illustrative examples, pre-kitting small ply quantities comprises pre-kitting no more than four plies. Pre-kitting can comprise any desirable quantity of plies. In some illustrative examples, pre-kitting small ply quantities allows for easier forming.

In some illustrative examples, forming using flexible tooling, such as an ADAPA table, is possible because of lower forming pressures and final shape consolidation is conducted in a later step. In some illustrative examples, direct deposition of the plies onto the flexible tooling, such as the ADAPA table, will reduce the use of dedicated lay-up tooling. The flexible tooling, such as an ADAPA, can make small changes for each pre-kitted ply set.

Pick and place of pre-kitted ply sets onto a final consolidation tool reduces deposition time/utilization cycle time of the consolidation tool. The consolidation tool can be the most valuable and expensive tool in the manufacturing environment.

In some illustrative examples, lower consolidation pressure is applied to the final part when the pre-kitted ply sets are preconsolidated. When the pre-kitted ply sets are preconsolidated, the illustrative examples may only consolidate the interfaces between the pre-kitted ply sets (kits). Limited consolidation may lead to lesser infrastructure to cure.

The illustrative examples provide fabrication of smaller-scale kits or preforms offline from the main consolidation tool. The illustrative examples are also using less pressure to "consolidate". By using pre-kitted ply sets, consolidation activities can be performed at lower part thicknesses (ply quantities).

The illustrative examples can be used for build/fabrication of large-scale thermoplastic components. The illustrative examples may also be used for higher quality fabrication of mid-sized and/or complex thermoplastic parts.

These illustrative examples enable economic and higher quality manufacture of large thermoplastic structures. Thermoplastic structures can be tougher than thermosets and lighter than metallic parts. A direct cost savings of approximately 30-50% for small and mid-sized components could be accomplished. There could also be benefits in environmental factors, as thermoplastic structures/materials can be largely recycled, when compared to thermoset materials.

Further, the disclosure comprises examples according to the following clauses:
1. A composite structure comprising:
   a plurality of pre-kitted ply sets with a same ply layup positioned to form continuous plies, each pre-kitted ply set of the plurality of pre-kitted ply sets comprising:
   a first ply having a first shape and an overhang on a first side of the ply layup; and
   a second ply overlying at least a portion of the first ply, the second ply having a second shape.
2. The composite structure of clause 1, wherein each pre-kitted ply set of the plurality of pre-kitted ply sets is pre-consolidated and pre-formed into a desired out of plane curvature.
3. The composite structure of clause 1, wherein the composite structure is a thermoplastic composite structure, and wherein each pre-kitted ply set of the plurality of pre-kitted ply sets further comprises at least one low temperature thermoplastic material on an outside of the pre-kitted ply set and in contact with at least one of the first ply or the second ply.
4. The composite structure of clause 1, wherein the first ply has a first ply angle different from a second ply angle of the second ply.
5. The composite structure of clause 1, wherein the first shape is a parallelogram.
6. The composite structure of clause 1, wherein the second shape is a square.
7. The composite structure of clause 1, wherein at least one of the first shape or the second shape is a triangle.
8. The composite structure of clause 1, wherein each pre-kitted ply set further comprises a third ply overlying the second ply, the third ply having a third shape and an overhang on a second side of the ply layup.
9. The composite structure of clause 8, wherein the third shape comprises a parallelogram.
10. The composite structure of clause 8, wherein the third shape has a portion overlapping a portion of the second shape and a portion of the first shape within each pre-kitted ply set of the plurality of pre-kitted ply sets.
11. The composite structure of clause 1 further comprising:
   a pre-kitted ply end set abutting one pre-kitted ply set of the plurality of pre-kitted ply sets, the pre-kitted ply end set comprising a first ply having a fourth shape, the first ply of the plurality of pre-kitted ply sets and the first ply of the pre-kitted ply end set comprise the same ply angle.
12. The composite structure of clause 1 further comprising:
   an additional plurality of pre-kitted ply sets with a same ply layup as the plurality of pre-kitted ply sets, wherein the additional plurality of pre-kitted ply sets is positioned adjacent to the plurality of pre-kitted ply sets to extend the continuous plies.
13. The composite structure of clause 1 further comprising:
   a zero degree ply positioned over an intersection region of two pre-kitted ply sets of the plurality of pre-kitted ply sets.
14. The composite structure of clause 1 further comprising:
   a second plurality of pre-kitted ply sets with a second ply layup positioned to form a second set of continuous plies over the plurality of pre-kitted ply sets, each pre-kitted ply set of the second plurality of pre-kitted ply sets comprising:
   a first additional ply having a first additional shape and an overhang on a first side of the second ply layup; and
   a second additional ply overlying the first additional ply, the second additional ply having a second additional shape.
15. The composite structure of clause 14, wherein the first ply, second ply, first additional ply, and second additional ply each have different respective ply angles.
16. The composite structure of clause 1, wherein the plurality of pre-kitted ply sets is ultrasonically tacked together.
17. The composite structure of clause 1, wherein the plurality of pre-kitted ply sets comprise one of thermoset plies or dry fiber plies.
18. A method of forming a composite structure comprising:
   laying a first pre-kitted ply set onto a tool, the first pre-kitted ply set comprising a ply layup comprising a first ply having a first shape and an overhang on a first side of the ply layup and a second ply overlying the first ply, the second ply having a second shape; and
   laying a second pre-kitted ply set onto the tool abutting the first pre-kitted ply set to form continuous plies, the second pre-kitted ply set comprising the ply layup, wherein a first ply of the second pre-kitted ply set abuts the first ply of the first pre-kitted ply set and a second ply of the second pre-kitted ply set abuts the second ply of the first pre-kitted ply set.
19. The method of clause 18 further comprising:
   laying up the first ply and the second ply on a lay-up tool;
   pre-forming a curvature into the first ply and the second ply; and
   pre-consolidating the first ply and the second ply with the curvature to form the first pre-kitted ply set.
20. The method of clause 18, wherein the ply layup of the first pre-kitted ply set further comprises a third ply overlying the second ply, the third ply having a third shape and an overhang on a second side of the ply layup, and wherein laying the second pre-kitted ply set onto the tool further comprises abutting a third ply of the second pre-kitted ply set to a third ply of the first pre-kitted ply set.
21. The method of clause 20 further comprising:
   laying a pre-kitted ply end set abutting the second pre-kitted ply set, the pre-kitted ply end set comprising a first ply having a fourth shape, wherein a first ply of the second pre-kitted ply set and the first ply of the pre-kitted ply end set comprise a same ply angle.
22. The method of clause 18 further comprising:
   laying up a zero degree ply over an intersection region of the first pre-kitted ply set and the second pre-kitted ply set.
23. The method of clause 18, wherein a plurality of pre-kitted ply sets comprises the first pre-kitted ply set and the second pre-kitted ply set, the method further comprising:
   laying up a second plurality of pre-kitted ply sets with a second ply layup positioned to form a second set of continuous plies over the plurality of pre-kitted ply sets, each pre-kitted ply set of the second plurality of pre-kitted ply sets comprising:
   a first additional ply having a first additional shape and an overhang on a first side of the second ply layup; and
   a second additional ply overlying the first additional ply, the second additional ply having a second additional shape.
24. The method of clause 18, wherein a plurality of pre-kitted ply sets comprises the first pre-kitted ply set and the second pre-kitted ply set, the method further comprising:
   laying up an additional plurality of pre-kitted ply sets with the ply layup positioned adjacent to the set of continuous plies to extend the continuous plies.
25. A method of forming a composite structure comprising:
   laying up a plurality of pre-kitted ply sets with a same ply layup to form continuous plies, each pre-kitted ply set of the plurality of pre-kitted ply sets comprising a first ply having a first shape and an overhang on a first side of the ply layup, and a second ply overlying the first ply, the second ply having a second shape.
26. The method of clause 25 further comprising:
   laying up a second plurality of pre-kitted ply sets with a second ply layup positioned to form a second set of continuous plies over the plurality of pre-kitted ply sets, each pre-kitted ply set of the second plurality of pre-kitted ply sets comprising a first additional ply having a first additional shape and an overhang on a first side of the second ply layup; and a second additional ply overlying the first additional ply, the second additional ply having a second additional shape.
The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A composite structure (202) comprising:
a plurality of pre-kitted ply sets (206) with a same ply layup (214) positioned to form continuous plies (204), each pre-kitted ply set of the plurality of pre-kitted ply sets (206) comprising:
a first ply (218, 234) having a first shape (220) and an overhang on a first side of the ply layup (214); and
a second ply (224, 240) overlying at least a portion of the first ply (218, 234), the second ply (224, 240) having a second shape (225).

2. The composite structure (202) of claim 1, wherein each pre-kitted ply set of the plurality of pre-kitted ply sets (206) is pre-consolidated (290) and pre-formed (292) into a desired out of plane curvature.

3. The composite structure (202) of claim 1 or 2, wherein the composite structure (202) is a thermoplastic composite structure (288), and wherein each pre-kitted ply set of the plurality of pre-kitted ply sets (206) further comprises at least one low temperature thermoplastic material (296) on an outside of the pre-kitted ply set and in contact with at least one of the first ply (218) or the second ply (224).

4. The composite structure (202) of any one of claims 1-3, wherein the first ply (218, 234) has a first ply angle (219) different from a second ply angle (226) of the second ply (224, 240).

5. The composite structure (202) of any one of the preceding claims, wherein the first shape (220) is a parallelogram, and/or wherein the second shape (225) is a square, and/or wherein at least one of the first shape (220) or the second shape (225) is a triangle.

6. The composite structure (202) of any one of the preceding claims, wherein each pre-kitted ply set further comprises a third ply (230, 244) overlying the second ply (224, 240), the third ply (230, 244) having a third shape (232) and an overhang (233) on a second side of the ply layup (214).

7. The composite structure (202) of claim 6, wherein the third shape (232) comprises a parallelogram.

8. The composite structure (202) of claim 6 or 7, wherein the third shape (232) has a portion overlapping a portion of the second shape (225) and a portion of the first shape (220) within each pre-kitted ply set of the plurality of pre-kitted ply sets (206).

9. The composite structure (202) of any one of the preceding claims further comprising:
a pre-kitted ply end set (212) abutting one pre-kitted ply set of the plurality of pre-kitted ply sets (206), the pre-kitted ply end set (212) comprising a first ply (248) having a fourth shape (250), the first ply (218, 234) of the plurality of pre-kitted ply sets (206) and the first ply (248) of the pre-kitted ply end set (212) comprise the same ply angle (219);
an additional plurality of pre-kitted ply sets with a same ply layup (214) as the plurality of pre-kitted ply sets (206), wherein the additional plurality of pre-kitted ply sets is positioned adjacent to the plurality of pre-kitted ply sets (206) to extend the continuous plies (204); and/or
a zero degree ply (260) positioned over an intersection region of two pre-kitted ply sets of the plurality of pre-kitted ply sets (206).

10. The composite structure (202) of any one of the preceding claims further comprising:
a second plurality of pre-kitted ply sets (264) with a second ply layup (266) positioned to form a second set of continuous plies (262) over the plurality of pre-kitted ply sets (206), each pre-kitted ply set of the second plurality of pre-kitted ply sets (264) comprising:
a first additional ply (268) having a first additional shape (269) and an overhang on a first side of the second ply layup (266); and
a second additional ply (270) overlying the first additional ply (268), the second additional ply (270) having a second additional shape (271).

11. The composite structure (202) of claim 10, wherein the first ply (218, 234), second ply (224, 240), first additional ply (268), and second additional ply (270) each have different respective ply angles.

12. The composite structure (202) of any one of the preceding claims, wherein the plurality of pre-kitted ply sets (206) is ultrasonically tacked together.

13. The composite structure (202) of any one of the preceding claims, wherein the plurality of pre-kitted ply sets (206) comprise one of thermoset plies (286) or dry fiber plies (285).

14. A method (1200) of forming a composite structure (202) comprising:
laying up (1202) a plurality of pre-kitted ply sets (206) with a same ply layup (214) to form continuous plies (204), each pre-kitted ply set of the plurality of pre-kitted ply sets (206) comprising a first ply (218, 234) having a first shape (220) and an overhang on a first side of the ply layup (214), and a second ply (224, 240) overlying the first ply (218, 234), the second ply (224, 240) having a second shape (225).

15. The method (1200) of claim 14 further comprising:
laying up (1204) a second plurality of pre-kitted ply sets (264) with a second ply layup (266) positioned to form a second set of continuous plies (262) over the plurality of pre-kitted ply sets (206), each pre-kitted ply set of the second plurality of pre-kitted ply sets (264) comprising a first additional ply (268) having a first additional shape (269) and an overhang on a first side of the second ply layup (266); and a second additional ply (270) overlying the first additional ply (268), the second additional ply (270) having a second additional shape (271).
